# EUROPEAN PATENT SPECIFICATION

(11) **EP 1 778 738 B1**
(45) Date of publication and mention of the grant of the patent: **07.05.2014**
(21) Application number: 05785123.0
(22) Date of filing: 09.08.2005
(51) Int. Cl.: C08F 4/02, C08F 4/642, C08F 4/659, C08F 10/06

(54) **SUPPORTED BIS(HYDROXYARYLARYLOXY) CATALYSTS FOR MANUFACTURE OF POLYMERS**
GETRÄGERTE BIS(HYDROXYARYLARYLOXY)-KATALYSATOREN ZUR HERSTELLUNG VON POLYMEREN
CATALYSEURS BIS(HYDROXYARYLARYLOXY) UTILISÉS POUR LA FABRICATION DE POLYMÈRES

(30) Priority: 09.08.2004 US 600091 P; 01.12.2004 US 632100 P
(43) Date of publication of application: 02.05.2007
(73) Proprietor: Dow Global Technologies LLC, Midland, MI 48674 (US)
(72) Inventor: CARNAHAN, Edmund, M., Fresno, TX 77545 (US); DEVORE, David, D., Midland, MI 48642 (US); GODZIELA, Gregory, M., Houston, TX 77064 (US); VOSEJPKA, Paul, C., Midland, MI 48640 (US); WAGNER, Burkhard, Eric, Highland Park, NJ 08904 (US); COALTER, Joseph. N., III, Katy 77450 Texas (US)
(74) Representative: Beck Greener
(86) International application number: PCT/US2005/028239
(87) International publication number: WO 2006/020624

(56) References cited:
- EP-A- 1 313 746
- WO-A-03/040195
- WO-A-2005/090426
- US-A- 4 452 914
- US-A1- 2004 005 984

## Description

### BACKGROUND OF THE INVENTION

The present invention relates to supported olefin polymerization catalysts and to a process for preparing polypropylene and other olefin polymers therefrom. The resulting polymers are well known commercially and may be usefully employed in the preparation of solid articles such as moldings, films, sheets and foamed objects by molding, extruding or other processes. The resulting products include components for automobiles, such as bumpers; packaging materials; and other applications.

In US-A-2004/0005984, US-A-2004/0010103 and US-A-2004/0014950 (equivalents to WO03/091262) certain transition metal bis(biphenylphenol) donor complexes for use as components of olefin polymerization catalysts were disclosed. At paragraphs 0120 of each publication the use of supports such as silica or alumina for preparing heterogeneous versions of such metal complexes was taught.

Despite the advance in the art occasioned by the foregoing metal complexes including supported versions thereof, use of silica or alumina in their many forms to prepare such supported metal complexes and catalysts has proven problematic. In particular, supporting the metal complex on the inert support in a manner so as to prevent subsequent premature loss from the support within a polymerization reactor has previously not been attainable. Moreover, supporting the metal complexes and catalyst compositions comprising the same in a manner so as to prevent loss of polymerization activity has also proven difficult. On the other hand, and surprisingly, it has also been determined that supporting the foregoing metal complexes and catalyst compositions comprising the same according to prior art techniques can result in supported catalyst compositions that are too active, leading to excess localized heat production and fusing of polymer particles, thereby resulting in formation of polymer clumps or chunks and poor reactor operability.

In view of the foregoing difficulties in reactor operability and polymer properties, the present inventors have undertaken diligent efforts to provide improved supported metal complexes and catalysts of the foregoing types that provide improved operability of the polymerization reactor, especially gas-phase reactors, and improved polymer properties.

### SUMMARY OF THE INVENTION

According to the present invention there are now provided a supported, heterogeneous catalyst composition for use in polymerization of addition polymerizable monomers to form high molecular weight polymers, comprising:
1) a substrate comprising a solid, particulated, high surface area silica surface modified by treatment with an organoaluminum compound,
2) a Group 4 metal bis(hydroxyarylaryloxy) complex of Formula I as defined here-in-after; and optionally,
3) an activating cocatalyst for the metal complex.

The present invention also provides a process for preparing high molecular weight polymers of one or more addition polymerizable monomers, especially propylene, 2-methyl-4-butene, and mixtures of ethylene with one or more C₃₋₈ α-olefins, especially propylene, 1-butene, 1-hexene, 2-methyl-4-butene, or 1-octene, comprising contacting one or more addition polymerizable monomers under addition polymerization conditions with a catalyst composition of the invention.

### BRIEF DESCRIPTION OF THE DRAWINGS

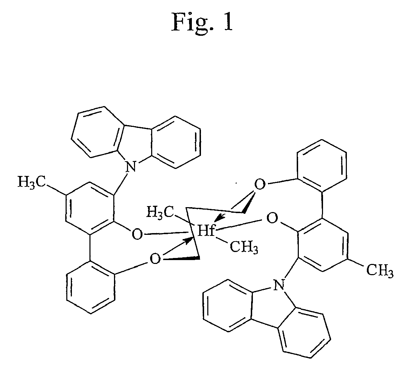

Figure 1 is the structure of the metal complex used to prepare the supported catalyst of Example 1.

### DETAILED DESCRIPTION OF THE INVENTION

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups.

The term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. The term "consisting of" excludes any component, step or procedure not specifically delineated or listed. The term "or", unless stated otherwise, refers to the listed members individually as well as in any combination.

The term "polymer", includes both homopolymers, that is, polymers prepared from a single reactive compound, and copolymers, meaning polymers prepared by reaction of at least two polymer forming, reactive, monomeric compounds. More specifically, the term "polypropylene" includes homopolymers of propylene and copolymers of propylene and one or more olefins, with the proviso that if the comonomer comprises ethylene, at least 60 percent of the polymer units must be derived from propylene, that is, a methyl- substituted ethylene group. The term "crystalline" if employed, refers to a polymer that exhibits an X-ray diffraction pattern at 25 °C and possesses a first order transition or crystalline melting point (Tm). The term may be used interchangeably with the term "semicrystalline". The term "particle" refers to irregular, approximately spherical shaped polymer fragments or agglomerates thereof produced directly from a gas-phase polymerization process and having an average maximum cross-section size of 5 mm, preferably 3 mm.

The polymers prepared according to the invention, especially include copolymers of propylene and ethylene, containing at least 90 percent by weight polymerized propylene, and preferably possess narrow molecular weight distribution, that is, Mw/Mn of 3.0 or less, preferably 2.8 or less. In addition, they are characterized by high crystallinity, especially a Tm of at least 155 °C, more preferably at least 160 °C. Highly desirably, the polymers are in the form of particles that are suited for use in preparing fibers and films, especially packaging films having improved heat seal properties and high transparency or clarity.

The silica substrate is surface modified, as explained here-in-after. Preferably the silica has a surface area as determined by nitrogen porosimetry using the B.E.T. method from 10 to 1000 m²/g, and preferably from 100 to 600 m²/g. The pore volume of the silica as well as the resulting catalyst composition, as determined by nitrogen adsorption, is typically up to 5 cm³/g, advantageously between 0.1 and 3 cm³/g, preferably from 0.2 to 2 cm³/g. The average particle size is chosen to fit the desired application, as explained here-in-after, and typically is from 0:1 to 500 µm, preferably from 1 to 200 µm, more preferably 10 to 100 µm.

The silica may be in granular, agglomerated, pelletized, or any other physical form. Suitable materials include silicas available from Grace Davison (division of W.R. Grace & Co.) under the designations SD 3216.30, Davison Syloid ™245, Davison 948, Davison 952, and Davison 955, from Ineos Silicas, Inc. under the designation Ineos 70 and 757, from Cabot Corporation under the designation Cabosil™, and from Degussa AG under the designation Aerosil ™812.

The silica is preferably dehydrated or dried, by heating or calcining in the presence or absence of air or under an inert atmosphere, as is well known in the art, to remove physi-sorbed water, oxygen, carbon dioxide, or other molecules. Alternatively however, in one embodiment, the silica may initially contain small quantities of water, up to 20 weight percent, which is carefully reacted with a surface modifying compound according to the present invention. Suitable thermal treatments, if employed, are heating at 100°C to 1000°C, preferably at 200°C to 850°C. Preferred is the use of an inert atmosphere or under reduced pressure. Typically, this treatment is carried out for 10 minutes to 72 hours, preferably from 0.5 hours to 24 hours.

The silica is thereafter treated with an organoaluminum compound. Suitable organoaluminum compounds include the well known trihydrocarbyl aluminums, such as trialkylaluminums, especially trimethylaluminum, triethylaluminum, and triisbutylaluminum; trihalohydrocarbyl aluminum compounds, such as tris(pentafluorophenyl)aluminum; and oxygen containing organoaluminum compounds, such as alumoxanes. The resulting product is referred to herein as being "surface modified".

Suitable alumoxanes for treatment of the silica supports herein include polymeric or oligomeric alumoxanes, especially methylalumoxane, and neutral Lewis acid modified polymeric or oligomeric alumoxanes, such as alkylalumoxanes modified by addition of a C₁₋₃₀ hydrocarbyl substituted Group 13 compound, especially a tri(hydrocarbyl)aluminum- or tri(hydrocarbyl)boron-compound, or a halogenated (including perhalogenated) derivative thereof, having from I to 10 carbons in each hydrocarbyl or halogenated hydrocarbyl group, more especially a trialkylaluminum compound, a perfluorinated tri(aryl)boron compound, or a perfluorinated tri(aryl)aluminum compound. Examples include triisobutyl aluminum- or tri-n-butyl aluminum- modified methylalumoxane, sometimes referred to as modified methalumoxane, or MMAO. The most preferred alumoxane for treatment of the silica support is methalumoxane or trialkylaluminum modified methalumoxane. Alumoxanes are preferred surface modifiers for use in the present invention due to the fact that they may also serve as an activator or a portion of the activator for the metal complex.

The silica is treated with the surface modifying compound by contacting a solution or dispersion thereof with the silica, optionally at an elevated temperature, in the substantial absence of interfering substances such as oxygen, water or other polar compounds. The organometal compound is desirably dissolved or dispersed in an inert liquid, such as a hydrocarbon, and the silica immersed, coated, sprayed, or otherwise brought into contact with the solution or dispersion for an appropriate contact period from one minute to several days. The resulting solid may be recovered and devolatilized or rinsed with an inert diluent, especially an aliphatic hydrocarbon to remove excess surface modifying compound, if desired, prior to use. Typically the quantity of surface modifying compound used with respect to silica is sufficient to provide a concentration of from 0.1 to 50 µmol per g of silica, preferably from 1 to 10 µmol/g. The quantity of surface modifying compound employed is desirably sufficient to react with available hydroxide or other Lewis base sites of the silica on the surface of the support without depositing a significant quantity of material that is capable of being removed by contact with an aliphatic hydrocarbon liquid. Desirably no more than 10 percent, preferably no more than 5 percent, and most preferably no more than 1 percent of the surface modified support is removed by contacting with hexane at 25 °C for 15 minutes.

The metal complexes of bis(hydroxyarylaryloxy) ligands for use in the present invention are Group 4 metal derivatives, especially hafnium derivatives of bis(hydroxyarylaryloxy) compounds of the Formula (I): 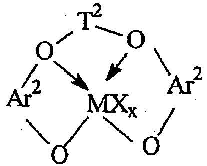 wherein:
T² is a divalent bridging group of from 2 to 20 atoms not counting hydrogen, preferably a substituted or unsubstituted, C₃₋₆ alkylene group; and
Ar² independently each occurrence is an arylene or an alkyl- or aryl-substituted arylene group of from 6 to 20 atoms not counting hydrogen;
M is a Group 4 metal, preferably hafnium;
X independently each occurrence is an anionic, neutral or dianionic ligand group;
x is a number from 1 to 5 indicating the number of such X groups; and
bonds and electron donative interactions in this and all other formulas depicted herein are represented by lines and arrows respectively.

Preferred examples of metal complexes of formula (I) correspond to the formula: 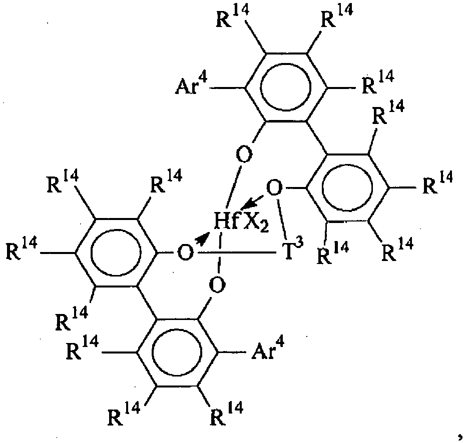
where Ar⁴ is C₆₋₂₀ aryl or inertly substituted derivatives thereof, especially 3,5-di(isopropyl)phenyl, 3,5-di(isobutyl)phenyl, dibenzo-1H-pyrrole-1-yl, or anthracen-5-yl, and
T³ independently each occurrence is C₃₋₆ alkylene or an inertly substituted derivative thereof;
R¹⁴ independently each occurrence is hydrogen, halo, hydrocarbyl, trihydrocarbylsilyl, or trihydrocarbylsilylhydrocarbyl of up to 50 atoms not counting hydrogen; and
X, independently each occurrence is halo or a hydrocarbyl or trihydrocarbylsilyl group of up to 20 atoms not counting hydrogen, or 2 X groups together are a divalent derivative of the foregoing hydrocarbyl or trihydrocarbylsilyl groups.

Especially preferred are compounds of the formula: 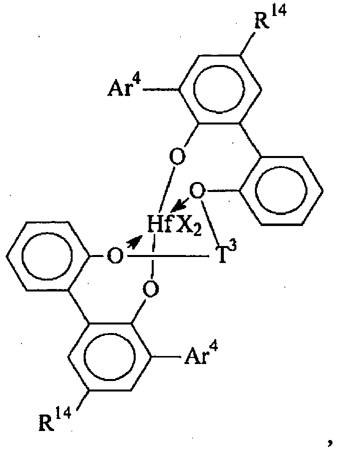
wherein Ar⁴ is 3,5-di(isopropyl)phenyl, 3,5-di(isobutyl)phenyl, dibenzo-1H-pyrrole-1-yl, or anthracen-5-yl,
R¹⁴ is hydrogen, halo, or C₁₋₄ alkyl, especially methyl
T³ is propan-1,3-diyl or butan-1,4-diyl, and
X is chloro, methyl or benzyl.

A most highly preferred metal complex of formula (I) corresponds to the formula:

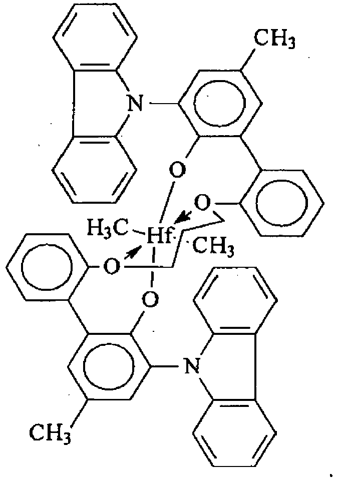

The foregoing bis(hydroxyarylaryloxy) complexes are conveniently prepared by standard metallation and ligand exchange procedures involving a source of the Group 4 metal and the neutral bis(hydroxyarylaryloxy) source as disclosed in the teachings of US-A-2004/0005984.

The metal complexes are rendered catalytically active by combination with a cocatalyst, such as a cation forming cocatalyst, or other cocatalyst suitably used with transition metal olefin polymerization complexes. Suitable cation forming cocatalysts for use herein include neutral Lewis acids, such as C₁₋₃₀ hydrocarbyl substituted Group 13 compounds, especially tri(hydrocarbyl)aluminum- or tri(hydrocarbyl)boron compounds and halogenated (including perhalogenated) derivatives thereof, having from 1 to 10 carbons in each hydrocarbyl or halogenated hydrocarbyl group, more especially perfluorinated tri(aryl)boron compounds, and most especially tris(pentafluorophenyl)boron; nonpolymeric, compatible, noncoordinating, ion forming compounds (including the use of such compounds under oxidizing conditions), especially the use of ammonium-, phosphonium-, oxonium-, carbonium-, silylium- or sulfonium- salts of compatible, noncoordinating anions, or ferrocenium-, lead- or silver salts of compatible, noncoordinating anions; polymeric or oligomeric linear or cyclic organoaluminumoxy compounds, especially alumoxanes; and combinations of the foregoing cocatalysts and techniques. The foregoing activating cocatalysts and activating techniques have been previously taught with respect to different metal complexes for olefin polymerizations in the following references: EP-A-277,003, US-A-5,153,157, US-A-5,064,802, US-A-5,321,106, US-A-5,721,185, US-A-5,350,723, US-A-5,425,872, US-A-5,625,087, US-A-5,883,204, US-A-5,919,983, US-A-5,783,512, WO 99/15534, and WO99/42467.

Combinations of neutral Lewis acids, especially the combination of a trialkyl aluminum compound having from 1 to 4 carbons in each alkyl group and halogenated tri(hydrocarbyl)boron compounds having from 1 to 20 carbons in each hydrocarbyl group, especially tris(pentafluorophenyl)boron, with a nonpolymeric, compatible, noncoordinating, ion forming salt compound, further combinations of such neutral Lewis acid mixtures with a polymeric or oligomeric alumoxane, and combinations of a neutral Lewis acid, especially tris(pentafluorophenyl)boron, with a polymeric or oligomeric alumoxane may be used as activating cocatalysts. Preferred molar ratios of metal complex:tris(pentafluorophenylboron: alumoxane are from 1:1:1 to 1:5:20, more preferably from 1:1:1.5 to 1:5:10.

Suitable cation forming compounds useful as cocatalysts in one embodiment of the present invention comprise a cation which is a Bronsted acid capable of donating a proton, and a compatible, noncoordinating anion, A⁻. As used herein, the term "noncoordinating" means an anion or substance which either does not coordinate to the transition metal containing precursor complex and the catalytic derivative derived therefrom, or which is only weakly coordinated to such complexes thereby remaining sufficiently labile to be displaced by a neutral Lewis base. A noncoordinating anion specifically refers to an anion which when functioning as a charge balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include aluminum, gold and platinum. Suitable metalloids include boron, phosphorus, and silicon. Compounds containing anions which comprise coordination complexes containing a single metal or metalloid atom are, of course, well known and many, particularly such compounds containing a single boron atom in the anion portion, are available commercially.

Preferably such cocatalysts may be represented by the following general formula:

(L*-H)_{g}⁺ (A)^{g-},

wherein:
L* is a neutral Lewis base;
(L*-H)⁺ is a conjugate Bronsted acid of L*;
A^{g-} is a noncoordinating, compatible anion having a charge of g-, and
g is an integer from 1 to 3.

More preferably A^{g-} corresponds to the formula: [M'Q₄]⁻; wherein:
M' is boron or aluminum in the +3 formal oxidation state; and
Q independently each occurrence is selected from hydride, dialkylamido, halide, hydrocarbyl, hydrocarbyloxide, halosubstituted-hydrocarbyl, halosubstituted hydrocarbyloxy, and halo- substituted silylhydrocarbyl radicals (including perhalogenated hydrocarbyl- perhalogenated hydrocarbyloxy- and perhalogenated silylhydrocarbyl radicals), said Q having up to 20 carbons with the proviso that in not more than one occurrence is Q halide. Examples of suitable hydrocarbyloxide Q groups are disclosed in US-A-5,296,433.

In a more preferred embodiment, d is one, that is, the counter ion has a single negative charge and is A-. Activating cocatalysts comprising boron which are particularly useful in the preparation of catalysts of this invention may be represented by the following general formula:

(L*-H)⁺(BQ₄)⁻;

wherein:
L* is as previously defined;
B is boron in a formal oxidation state of 3; and
Q is a hydrocarbyl-, hydrocarbyloxy-, fluorinated hydrocarbyl-, fluorinated hydrocarbyloxy-, or fluorinated silylhydrocarbyl- group of up to 20 nonhydrogen atoms, with the proviso that in not more than one occasion is Q hydrocarbyl.

Preferred Lewis base salts are ammonium salts, more preferably trialkylammonium salts containing one or more C₁₂₋₄₀ alkyl groups. Most preferably, Q is each occurrence a fluorinated aryl group, especially, a pentafluorophenyl group.

Illustrative examples of boron compounds which may be used as an activating cocatalyst in the preparation of the improved catalysts of this invention are
tri-substituted ammonium salts such as:
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
tri(sec-butyl)ammonium tetrakis(pentafluorophenyl) borate,
N,N-dimethylanilinium tetrakis(pentafluorophenyl) borate,
N,N-dimethylanilinium n-butyltris(pentafluorophenyl) borate,
N,N-dimethylanilinium benzyltris(pentafluorophenyl) borate,
N,N-dimethylanilinium tetrakis(4-(t-butyldimethylsilyl)-2, 3, 5, 6-tetrafluorophenyl) borate,
N,N-dimethylanilinium tetrakis(4-(triisopropylsilyl)-2,3, 5,6-tetrafluorophenyl)borate,
N,N-dimethylanilinium pentafluorophenoxytris(pentafluorophenyl) borate,
N,N-diethylanilinium tetrakis(pentafluorophenyl) borate,
N,N-dimethyl-2,4,6-trimethylanilinium tetrakis(pentafluorophenyl) borate,
dimethyloctadecylammonium tetrakis(pentafluorophenyl) borate,
methyldioctadecylammonium tetrakis(pentafluorophenyl) borate,
dialkyl ammonium salts such as:
di-(i-propyl)ammonium tetrakis(pentafluorophenyl) borate,
methyloctadecylammonium tetrakis(pentafluorophenyl) borate,
methyloctadodecylammonium tetrakis(pentafluorophenyl) borate, and
dioctadecylammonium tetrakis(pentafluorophenyl) borate;
tri-substituted phosphonium salts such as:
triphenylphosphonium tetrakis(pentafluorophenyl) borate,
methyldioctadecylphosphonium tetrakis(pentafluorophenyl) borate, and
tri(2,6-dimethylphenyl)phosphonium tetrakis(pentafluorophenyl) borate;
di-substituted oxonium salts such as:
diphenyloxonium tetrakis(pentafluorophenyl) borate,
di(o-tolyl)oxonium tetrakis(pentafluorophenyl) borate, and
di(octadecyl)oxonium tetrakis(pentafluorophenyl) borate;
di-substituted sulfonium salts such as:
di(o-tolyl)sulfonium tetrakis(pentafluorophenyl) borate, and
methylcotadecylsulfonium tetrakis(pentafluorophenyl) borate.

Preferred (L*-H)⁺ cations are methyldioctadecylammonium cations, dimethyloctadecylammonium cations, and ammonium cations derived from mixtures of trialkyl amines containing one or 2 C₁₄₋₁₈ alkyl groups.

As previously stated, derivatives of the foregoing ammonium salt compounds with a Lewis acid, especially a trialkyl aluminum compound, especially a tri(C₁₋₄)alkyl aluminum compound have been found to be particularly beneficially employed in combination with the supported catalysts of the invention. For example, one such compound is the triethylaluminum adduct or reaction product of methylbis(C₁₈₋₂₂alkyl)ammonium (p-hydroxy-phenyl)tris(pentafluorophenyl)borate, which is believed to have the formula: [((C₂H₅)₂AlOC₆H₄)B⁻(C₆F₅)₃] [N⁺HMe(C₁₈₋₂₂H₃₇₋₄₅)₂]. This class of cocatalysts is further disclosed in US-A-5,834,393, US-A-2004/0220051 as well as WO2004/094487.

Another suitable ion forming, activating cocatalyst comprises a salt of a cationic oxidizing agent and a noncoordinating, compatible anion represented by the formula:

(Ox^{h+})_{g}(A^{g-})ₕ,

wherein:
Ox^{h+} is a cationic oxidizing agent having a charge of h+;
h is an integer from 1 to 3; and
A^{g-} and g are as previously defined.

Examples of cationic oxidizing agents include: ferrocenium, hydrocarbyl-substituted ferrocenium, Ag⁺, or Pb⁺². Preferred embodiments are those anions previously defined with respect to the Bronsted acid containing activating cocatalysts, especially tetrakis(pentafluorophenyl)borate.

Another suitable ion forming, activating cocatalyst comprises a compound which is a salt of a carbenium ion and a noncoordinating, compatible anion represented by the formula:

[C]⁺ A',

wherein:
[C]⁺ is a C₁₋₂₀ carbenium ion; and
A⁻ is a noncoordinating, compatible anion having a charge of -1. A preferred carbenium ion is the trityl cation, that is triphenylmethylium.

A further suitable ion forming, activating cocatalyst comprises a compound which is a salt of a silylium ion and a noncoordinating, compatible anion represented by the formula:

(Q¹₃Si)⁺A⁻,

wherein:
Q¹ is C₁₋₁₀ hydrocarbyl, and A⁻ is as previously defined.

Preferred silylium salt activating cocatalysts are trimethylsilylium tetrakispentafluorophenylborate, triethylsilylium tetrakispentafluorophenylborate and ether substituted adducts thereof. Silylium salts have been previously generically disclosed in J. Chem Soc. Chem. Comm., 1993, 383-384, as well as Lambert, J. B., et al., Organometallics, 1994, 13, 2430-2443. The use of the above silylium salts as activating cocatalysts for addition polymerization catalysts is disclosed in US-A-5,625,087.

Certain complexes of alcohols, mercaptans, silanols, and oximes with tris(pentafluorophenyl)boron are also effective catalyst activators and may be used according to the present invention. Such cocatalysts are disclosed in US-A-5,296,433.

Suitable activating cocatalysts for use herein also include polymeric or oligomeric alumoxanes, especially methylalumoxane (MAO), triisobutylaluminum modified methylalumoxane (MMAO), or isobutylalumoxane; and Lewis acid modified alumoxanes, especially perhalogenated tri(hydrocarbyl)aluminum- or perhalogenated tri(hydrocarbyl)boron modified alumoxanes, having from 1 to 10 carbons in each hydrocarbyl or halogenated hydrocarbyl group, and most especially tris(pentafluorophenyl)boron modified alumoxanes. Such cocatalysts are previously disclosed in US-A- 6,214,760, US-A-6,160,146, US-A-6,140,521, and US-A-6,696,379.

A class of cocatalysts comprising non-coordinating anions generically referred to as expanded anions, further disclosed in US Patent 6,395,671, may be suitably employed to activate the metal complexes for use in the present invention. Generally, these cocatalysts (illustrated by those having imidazolide, substituted imidazolide, imidazolinide, substituted imidazolinide, benzimidazolide, or substituted benzimidazolide anions) may be depicted as follows: 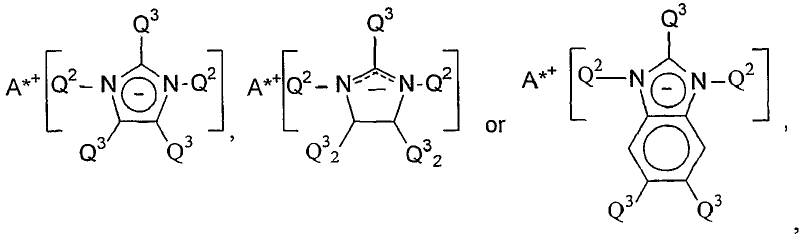 wherein:
A^{*+} is a cation, especially a proton containing cation, and preferably is a trihydrocarbyl ammonium cation containing one or two C₁₀₋₄₀ alkyl groups, especially a methyldi(C₁₄₋₂₀alkyl)-ammonium cation,
Q³, independently each occurrence, is hydrogen or a halo, hydrocarbyl, halocarbyl, halohydrocarbyl, silylhydrocarbyl, or silyl, (including mono-, di- and tri(hydrocarbyl)silyl) group of up to 30 atoms not counting hydrogen, preferably C₁₋₂₀ alkyl, and
Q² is tris(pentafluorophenyl)borane or tris(pentafluorophenyl)alumane).

Examples of these catalyst activators include trihydrocarbylammonium- salts, especially methyldi(C₁₄₋₂₀alkyl)ammonium- salts of:
bis(tris(pentafluorophenyl)borane)imidazolide,
bis(tris(pentafluorophenyl)borane)-2-undecylimidazolide,
bis(tris(pentafluorophenyl)borane)-2-heptadecylimidazolide,
bis(tris(pentafluorophenyl)borane)-4,5-bis(undecyl)imidazolide,
bis(tris(pentafluorophenyl)borane)-4,5-bis(heptadecyl)imidazolide,
bis(tris(pentafluorophenyl)borane)imidazolinide,
bis(tris(pentafluorophenyl)borane)-2-undecylimidazolinide,
bis(tris(pentafluorophenyl)borane)-2-heptadecylimidazolinide,
bis(tris(pentafluorophenyl)borane)-4,5-bis(undecyl)imidazolinide,
bis(tris(pentafluorophenyl)borane)-4,5-bis(heptadecyl)imidazolinide,
bis(tris(pentafluorophenyl)borane)-5,6-dimethylbenzimidazolide,
bis(tris(pentafluorophenyl)borane)-5,6-bis(undecyl)benzimidazolide,
bis(tris(pentafluorophenyl)alumane)imidazolide,
bis(tris(pentafluorophenyl)alumane)-2-undecylimidazolide,
bis(tris(pentafluorophenyl)alumane)-2-heptadecylimidazolide,
bis(tris(pentafluorophenyl)alumane)-4,5-bis(undecyl)imidazolide,
bis(tris(pentafluorophenyl)alumane)-4,5-bis(heptadecyl)imidazolide,
bis(tris(pentafluorophenyl)alumane)imidazolinide,
bis(tris(pentafluorophenyl)alumane)-2-undecylimidazolinide,
bis(tris(pentafluorophenyl)alumane)-2-heptadecylimidazolinide,
bis(tris(pentafluorophenyl)alumane)-4,5-bis(undecyl)imidazolinide,
bis(tris(pentafluorophenyl)alumane)-4,5-bis(heptadecyl)imidazolinide,
bis(tris(pentafluorophenyl)alumane)-5,6-dimethylbenzimidazolide, and
bis(tris(pentafluorophenyl)alumane)-5,6-bis(undecyl)benzimidazolide.

Other activators include those described in PCT publication WO 98/07515 such as tris (2, 2', 2"-nonafluorobiphenyl) fluoroaluminate. Combinations of activators are also contemplated by the invention, for example, alumoxanes and ionizing activators in combinations, see for example, EP-A-0 573120, PCT publications WO 94/07928 and WO 95/14044, and US-A-5,153,157 and US-A-5,453,410. WO 98/09996 describes activating compounds that are perchlorates, periodates and iodates, including their hydrates. WO 99/18135 describes the use of organoboroaluminum activators. WO 03/10171 discloses catalyst activators that are adducts of Bronsted acids with Lewis acids. Other activators or methods for activating a catalyst compound are described in for example, US-A-5,849,852, US-A-5,869,723, EP-A-615981, and PCT publication WO 98/32775. All of the foregoing catalyst activators as well as any other know activator for transition metal complexes may be employed alone or in combination according to the present invention.

It should be noted that the foregoing activating cocatalysts other than alumoxanes, are not preferably included in the invented composition, in as much as the best results have generally been obtained by the use of silica supports that have been surface modified by treatment with an alumoxane or a trihydrocarbyl aluminum compound, especially a trialkylaluminum compound, which is believed to form an alumoxane in situ by reaction with adventitious quantities of water on the silica surface, and optionally, additional alumoxane cocatalyst.

The method of preparation for the polymers of the invention depends upon several factors. An important factor is the temperature used for the polymerization. Temperature is important because it has a significant effect on the molecular weight of the resulting polymers. Generally, the use of lower polymerization temperatures results in polymers having higher molecular weights. For the present invention, temperatures in the range from 70°C to 150°C are preferred. More preferably, the temperature ranges from 90°C to 135°C.

The pressure of the reaction depends upon the selected process but generally varies from atmospheric to 10 MPa, preferably to 500 kPa to 4 MPa. Because the monomers employed may not have large partial pressures at the temperature of operation, an inert substance such as nitrogen, argon, butane, or hexane may be added to the reactor to increase the working pressure of the reactor. Reaction times in a batch polymerization or residence times in a continuous polymerization can vary from 1 minute to 10 hours, more preferably 5 minutes to 6 hours, and most typically from 15 minutes to 60 minutes.

A polymerization modifier (PM) composition may also be employed if desired to modify one or more process or product properties. Suitable PM compositions for use in the present invention in the most general sense comprise the reaction product of at least two reagents, such as one or more Lewis acids with one or more organic protonating reagents. It should be appreciated by one of skill in the art that the resulting product may contain a mixture of species, including equilibria between various species and dynamic, interconverting compounds. In one embodiment of the invention, the reaction mixture formed upon combining the foregoing reagents in a suitable diluent, preferably a hydrocarbon such as hexane or heptane, is preferred for use as a polymerization modifier, rather than the purified and/or isolated reaction product itself.

Thus in this embodiment, the invention comprises a supported, heterogeneous catalyst composition for use in polymerization of addition polymerizable monomers to form high molecular weight polymers, comprising:
1) a substrate comprising a solid, particulated, high surface area, surface modified, silica compound,
2) a Group 4 metal bis(hydroxyarylaryloxy) complex of Formula I as defined here-in-before; optionally,
3) an activating cocatalyst for the metal complex, and
4) a polymerization modifier.

Suitable Lewis acids are compounds of the formula: [M⁴A¹_{x'}G_{y'}]_{z'}, wherein:
M⁴ is a metal of Groups 2-13, Ge, Sn, or Bi;
A¹ is independently an anionic or polyanionic ligand;
x' is a number greater than zero and less than or equal to 6;
G is a neutral Lewis base, optionally bound to A¹;
y' is a number from 0-4; and
z' is a number from 1 to 10.

Preferably, the Lewis acids are compounds of the general formula: M⁴A¹_{x'}G_{y'}, wherein,
M⁴ is a metal of Groups 2-13, Ge, Sn, or Bi;
A¹ is independently an anionic ligand;
x' is an integer and is equal to the valence of M⁴;
G is a neutral Lewis base; and
y' is a number from 0-4.

More preferably, M⁴ is Mg, B, Ga, Al, or Zn; A¹ is C₁₋₂₀ hydrocarbyl or inertly substituted hydrocarbyl, especially C₁₋₁₂ alkyl or aryl. Preferred inert substituents include halide, trimethylsilyl, haloaryl, and haloalkyl.

The organic protonating reagents used to form polymerization modifiers include compounds of the formula: [(H-J¹)_{z"}A²]_{z'"}, wherein:
J¹ is NA³, PA³, S, or O,
z" is 1 or 2,
A² is C₁₋₂₀ hydrocarbyl or inertly substituted hydrocarbyl, tri(C₁₋₁₀hydrocarbyl)silyl, or a polyvalent derivative thereof,
A³ is hydrogen, C₁₋₂₀ hydrocarbyl or inertly substituted hydrocarbyl, or a covalent bond (when A² is a divalent ligand group and z" is one); and
z"' is a number from 1 to 10.

Preferred organic protonating reagents include compounds of the formula:
(H-J¹)_{z"}A², wherein J¹ is NA³, PA³, S, or O, and z" is 1 or 2; and A² is C₁₋₂₀ hydrocarbyl or inertly substituted hydrocarbyl, tri(C₁₋₄hydrocarbyl)silyl, or a divalent derivative thereof, especially C₁₋₁₂ alkyl, 1,4-butylene, tri(C₁₋₄alkyl)silyl, or aryl, and A³ is hydrogen, C₁₋₂₀hydrocarbyl or inertly substituted hydrocarbyl, or a covalent bond. Preferred inert substituents are halide, trimethylsilyl, haloaryl, or haloalkyl.

Examples of the foregoing polymerization modifiers include metal salts of carboxylic acids, especially long chain fatty acids or (poly)alkylene oxide derivatives thereof. Preferably, such carboxylate metal salt polymerization modifiers include mono-, di-, or tri- carboxylates of metals selected from Groups 1-15 of the Periodic Table of Elements. Examples include saturated, unsaturated, aliphatic, aromatic or alicyclic carboxylic acid salts where the carboxylate ligand has preferably from 2 to 24 carbon atoms and may be further substituted, such as acetate, propionate, butyrate, valerate, pivalate, caproate, isobuytlacetate, t-butyl-acetate, caprylate, heptanate, pelargonate, undecanoate, oleate, octoate, palmitate, myristate, margarate, stearate, arachate, salicylate, lactate and tercosanoate. Examples of the metals include: Li, Na, K, Mg, Ca, Sr, Sn, Ti, V, Ba, Zn, Cd, Hg, Mn, Fe, Co, Ni, Sb, and Al.

In one embodiment, the carboxylate metal salt is represented by the following general formula: M(Q)_{x"}(OOCR)_{y"},
where M is a metal from Groups 2 to 6 and 12 to 15, more preferably from Groups 2, 12 or 13, and most preferably Zn or Al; Q is halogen, hydrogen, hydroxide, hydrocarbyl, hydrocarbyloxy, tri(hydrocarbyl)silyl, tri(hydrocarbyl)silyloxy, di(hydrocarbyl)amido, di(hydrocarbyl)phosphide, hydroxy-, halo- or hydrocarbyloxy- substituted derivatives of the foregoing, or a mixture thereof; R is a hydrocarbyl or a halo-, hydroxy-, dihydrocarbylamino-, hydrocarbyloxy-, or poly(hydrocarbyloxy)- substituted hydrocarbyl group having from 2 to 100 carbon atoms, preferably 4 to 50 carbon atoms, most preferably 10-24 carbons; x" is an integer from 0 to 3 and y" is an integer from 1 to 4 and the sum of x" and y" is equal to the valence of the metal. In a preferred embodiment of the above formula y" is an integer from 1 to 3, preferably 1 or 2.

Examples of R in the above formula include straight or branched chain alkyl, cycloalkyl, alkoxyalkyl, aralkyl, hydroxyarylalkyl, hydroxyalkyl, and poly(alkyleneoxy)alkyl groups. Examples of Q in the above formula include alkyl, cycloalkyl, aryl, alkenyl, arylalkyl, arylalkenyl or alkylaryl, trialkylsilane, triarylsilane, dialkylamide, diarylamide, dialkyl phosphide, and alkoxy having from 1 to 30 carbon atoms. Desirably, the carboxylate metal salt has a melting point from 30°C. to 250°C., more preferably 50°C. to 230°C., and most preferably from 100°C to 200°C.

Preferred carboxylate metal salts are zinc or aluminum carboxylates, such as aluminum mono, di- and tri-stearates, octoates, oleates, laurates, lactates, cyclohexylbutyrates; ethylene oxide derivatives of the foregoing; or glycerol esters thereof. Certain of these metal carboxylate salts are commercially available and include various aluminum and zinc stearates, oleates and laurates having variable degrees of saponification. This class of composition has been previously disclosed for use as polymerization additives in US-A-6,472,342, and equivalents thereof. Hydroxyaluminum distearate may be particularly cited as a suitable polymerization modifier in combination with the supported metal complex catalysts of the present invention.

In another preferred embodiment, at least one R group is substituted with a hydroxy- or N,N-dihydrocarbylamino- group, preferably a hydroxy- group, that is desirably coordinated to the metal, M, by means of unshared electrons. The corresponding hydroxycarboxylate metal salts especially include compounds of the formulas: 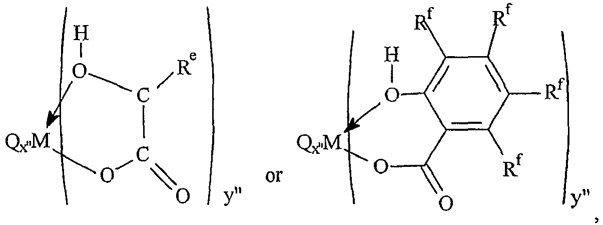
wherein R^{e} and R^{f} independently each occurrence are hydrogen, halogen, or C₁₋₆ alkyl, and
M, Q, x" and y" are as previously defined.

Preferred hydroxy- substituted carboxylate salts are zinc salts of the foregoing formula wherein R^{e} and R^{f} are all hydrogen or C₁₋₄ alkyl, x" is 0, and y" is 2. Examples of the foregoing metal hydroxycarboxylate compounds include zinc di(2-propionate) (also referred to as zinc di(lactate), zinc di(salicylate), zinc bis-3,5-di(i-propyl)salicylate, and zinc bis-3,5-di(t-butyl)salicylate. The foregoing hydroxy- substituted carboxylate salts have been previously disclosed for use as polymerization additives in WO2004094487.

The carboxylate metal salt in one embodiment may be combined with additional components designed for further modification of the catalyst composition or the reaction mixture. Examples include antistatic agents such as fatty amines and/or salt derivatives thereof, for example, Kemamine AS 990/2 zinc additive, a blend of ethoxylated stearyl amine and zinc stearate, or Kemamine AS 990/3, a blend of ethoxylated stearyl amine, zinc stearate and octadecyl-3,5-di-tert-butyl-4-hydroxyhydrocinnamate. Both these blends are available from Witco Corporation, Memphis, Tenn.

By using a polymerization modifier, one or more process or product properties is beneficially affected. Examples include the ability to prepare copolymers having higher or lower comonomer incorporation at equivalent polymerization conditions or alternatively, preparing equivalent copolymers at higher polymerization temperatures or lower comonomer concentrations in the reaction mixture. Another beneficial feature of the use of a polymerization modifier may be greater selectivity in product formation as determined by narrower or broader molecular weight distribution (Mw/Mn) of homopolymers and copolymer products or a relative lack of formation or reduction in formation of a particular species, such as a polymer fraction having differentiated crystallinity, solubility, tacticity, melting point, melt flow index, or other physical property. A further desirable result of the use of a PM may be improved process properties such as improved monomer conversion efficiency by scavenging impurities that may be present in a polymerization mixture. Highly desirably the PM is employed to moderate the catalyst activity in order to help prevent localized overheating which can lead to fusing of polymer particles in a gas phase polymerization. The PM causes the catalyst composition to become less active at elevated temperatures. The molar quantity of PM employed is generally in the amount from 0.1 to 10 moles per mole of metal complex.

In addition to the polymerization modifier, conventional additives may also be employed in the reaction mixture to obtain one or more beneficial results including those recited for the foregoing PM compositions. For example, a scavenger may be employed to remove detrimental impurities, if any, present in the reaction mixture. Examples of a suitable scavengers include tri(C₁₋₈alkyl) aluminum and alumoxane compounds, employed in an amount that is insufficient to result in activation or full activation of the metal complex. Especially preferred alumoxanes include triisopropylaluminum modified methylalumoxane or triisobutylaluminum modified methylalumoxane available commercially under the trade designation MMAO-IP and MMAO-3A from Akzo Nobel Corporation. Typically the molar quantity of such scavenger employed ranges from 1 to 10 moles based on metal (aluminum) value per mole of metal complex.

Another conventional additive for use in the reaction mixture is a surface active agent or antistatic agent which may assist in particle separation. Suitable surface active agents include waxes such as metal salts of carboxylic acids, especially stearic acid, for example calcium stearate, zinc stearate or magnesium stearate, (poly)glycol ethers, carbon black, and/or other known antistatic agents or mixtures thereof.

In one embodiment of the invention, the catalyst composition is formed into discrete particles by use of spray drying techniques. Accordingly, the components may be dispersed or dissolved in a suitable solvent or diluent, such as toluene or tetrahydrofuran. The resulting dispersion is forced through an atomizing nozzle under conditions of temperature and pressure to result in removal of the solvent or diluent and formation of solid particles of the catalyst composition. The techniques for spray drying of prior art catalyst compositions, such as those disclosed in US-A-'s 6,187,866; 5,567,665; 5,290,745; 5,122,494; 4,990,479; 4,728,705; 4,508,842; 4,482,687; 4,302,565, and 4,293,673 may be adapted for use in preparing spray dried catalyst compositions according to the present invention.

More particularly, a solution or slurry of the bis(hydroxyarylaryloxy) compound is mixed with the solid, particulated, high surface area, surface modified, silica, which usually has been dried by heating to a temperature of at least 100°C, more preferably at least 150 °C for a time from 1 to 10 hours, preferably from 2 to 5 hours prior to use. One or more activators may be added to the resulting slurry before, after or simultaneously with addition of the metal complex. Desirably, the quantity of surface modified, silica employed is from 1 to 95 percent, preferably from 30 to 90 percent of the total composition weight. After spray drying, the surface modified, silica desirably comprises from 70 to 99.999 percent, preferably from 90 to 99 percent of the spray dried catalyst particle's weight, and the silica alone preferably comprises from 20 to 40 percent preferably from 30 to 40 percent by weight.

The resulting mixture may be heated and then atomized by means of a suitable atomizing device to form discrete approximately spherically shaped particles. Atomization is usually effected by passing the slurry through the atomizer together with an inert drying gas. An atomizing nozzle or a centrifugal high speed disc can be employed to effect atomization. The volumetric flow of drying gas is normally considerably higher than the volumetric flow of the slurry in order to form the desired particle size and remove excess quantities of liquid components. The drying gas should be nonreactive under the conditions employed during atomization. Suitable gases include nitrogen and argon, however, any other gas may be used so long as it is nonreactive and results in the desired degree of drying of the catalyst. Generally, the drying gas is heated to an elevated temperature, preferably to a temperature from 100 to 300°C, more preferably from 150 to 220°C. If the volumetric flow of drying gas is high, lower drying gas temperatures may be employed.

The slurry comprising the catalyst, filler and optionally activator, is discharged under pressure through a nozzle or other atomizing device into a flowing stream of the drying gas. The dimensions of the spray drying device are sized to provide substantial liquid removal from the atomized catalyst mixture prior to contact thereof with the internal surfaces of the machine. If sufficiently dried, the resulting particles retain a substantially spherically shape upon impacting the surface of the spray drying device. The atomization nozzle pressure is chosen to provide desirable particle sizing and depends in part, on the velocity of the drying gas. Typical pressures are from 1-200 psig (0.01-1.5 MPa) more preferably from 10-150 psig (0.02-1.1MPa). In centrifugal atomization, the atomizer wheel diameter typically ranges from 50 to 500 mm, preferably from 90 to 200 mm. Wheel speeds may be adjusted to control the particle size. Typical wheel atomizer speeds are from 8,000 rpm to 24,000 rpm.

In another embodiment of the invention, the catalyst composition, including spray dried versions, may be prepolymerized by reaction with one or more olefin monomers under controlled, moderate polymerization conditions. The resulting product generally has more uniform particle size, greater particle structural integrity and moderated polymerization activity, leading to improved performance characteristics. Suitable prepolymerization conditions for use herein are well known and disclosed in numerous publications, such as US-A-'s 6,040,260 and 6,841,634, for example.

During the polymerization, a mixture of monomers is contacted with the supported, activated catalyst composition according to any suitable polymerization conditions. The process is generally characterized by use of elevated temperatures and pressures. Hydrogen may be employed as a chain transfer agent for molecular weight control according to known techniques if desired. As in other similar polymerizations, it is highly desirable that the monomers and solvents employed be of sufficiently high purity that catalyst deactivation does not occur. Any suitable technique for monomer purification such as devolatilization at reduced pressures, contacting with molecular sieves or high surface area alumina, or a combination of the foregoing processes may be employed.

In a preferred embodiment of the invention the supported catalysts are employed in either a solution, slurry or gas phase polymerization. The polymerization is desirably carried out as a continuous polymerization, wherein catalyst components, monomers, diluents, and optionally solvent or condensing agents, polymerization modifiers, surface active agents and/or scavengers are continuously supplied to the reaction zone and polymer product continuously removed therefrom. Within the scope of the terms "continuous" and "continuously" as used in this context are those processes in which there are intermittent additions of reactants or other components and removal of products at small regular intervals, so that, over time, the overall process is continuous.

For a solution polymerization process it is desirable to employ homogeneous dispersions of the catalyst components in liquid diluent in which the polymer is soluble under the polymerization conditions employed. One such process utilizing an extremely fine silica or similar dispersing agent to produce such a homogeneous catalyst dispersion is disclosed in US-A-5,783,512, and is applicable to the present procedure so long as the support is surface modified as herein described. A high pressure process is usually carried out at temperatures from 100°C to 400°C and at pressures above 500 bar (50 MPa). A slurry process typically uses an inert hydrocarbon diluent and temperatures of from 0°C up to a temperature just below the temperature at which the resulting polymer becomes substantially soluble in the inert polymerization medium. Preferred temperatures in a slurry polymerization are from 30°C, preferably from 60°C up to 115°C, preferably up to 100°C. Pressures typically range from atmospheric (100 kPa) to 500 psi (3.4 MPa).

Preferably for use in gas phase polymerization processes, the support material and resulting catalyst have a median particle diameter (D50) from 10 to 200 µm, more preferably from 10 µm to 150 µm, and most preferably from 10 µm to 100 µm. Preferably for use in slurry polymerization processes, the support has a median particle diameter from 1 µm to 200 µm, more preferably from 5 µm to 100 µm, and most preferably from 10 µm to 80 µm. Preferably for use in solution or high pressure polymerization processes, the support has a median particle diameter from 0.1 µm to 40 µm, more preferably from 1 µm to 30 µm, and most preferably from 2 µm to 20 µm.

The supported catalyst composition of the present invention is most beneficially employed in a gas phase polymerization process. Such processes are used commercially on a large scale for the manufacture of polypropylene, ethylene/propylene copolymers, and other olefin polymerizations. The gas phase process employed can be, for example, of the type which employs a mechanically stirred bed or a gas fluidized bed as the polymerization reaction zone. Preferred is the process wherein the polymerization reaction is carried out in a vertical cylindrical polymerization reactor containing a fluidized bed of polymer particles supported or suspended above a perforated plate, the fluidization grid, by a flow of fluidization gas.

The gas employed to fluidize the bed comprises the monomer or monomers to be polymerized, and also serves as a heat exchange medium to remove the heat of reaction from the bed. The hot gases emerge from the top of the reactor, normally via a tranquilization zone, also known as a velocity reduction zone, having a wider diameter than the fluidized bed and wherein fine particles entrained in the gas stream have an opportunity to gravitate back into the bed. It can also be advantageous to use a cyclone to remove ultra-fine particles from the hot gas stream. The gas is then normally recycled to the bed by means of a blower or compressor and one or more heat exchangers to strip the gas of the heat of polymerization.

A preferred method of cooling of the bed, in addition to the cooling provided by the cooled recycle gas, is to feed a volatile liquid to the bed to provide an evaporative cooling effect, often referred to as operation in the condensing mode. The volatile liquid employed in this case can be, for example, a volatile inert liquid, for example, a saturated hydrocarbon having 3 to 8, preferably 4 to 6, carbon atoms. In the case that the monomer or comonomer itself is a volatile liquid, or can be condensed to provide such a liquid, this can suitably be fed to the bed to provide an evaporative cooling effect. The volatile liquid evaporates in the hot fluidized bed to form gas which mixes with the fluidizing gas. If the volatile liquid is a monomer or comonomer, it will undergo some polymerization in the bed. The evaporated liquid then emerges from the reactor as part of the hot recycle gas, and enters the compression/heat exchange part of the recycle loop. The recycle gas is cooled in the heat exchanger and, if the temperature to which the gas is cooled is below the dew point, liquid will condense from the gas. This liquid is desirably recycled continuously to the fluidized bed. It is possible to recycle the condensed liquid to the bed as liquid droplets carried in the recycle gas stream. This type of process is described, for example in EP-89691; U.S. 4,543,399; WO-94/25495 and US-A-5,352,749. A particularly preferred method of recycling the liquid to the bed is to separate the liquid from the recycle gas stream and to reinject this liquid directly into the bed, preferably using a method which generates fine droplets of the liquid within the bed. This type of process is described in WO-94/28032.

The polymerization reaction occurring in the gas fluidized bed is catalyzed by the continuous or semi-continuous addition of catalyst composition. The catalyst composition may be subjected to a prepolymerization step, for example, by polymerizing a small quantity of olefin monomer in a liquid inert diluent, to provide a catalyst composite comprising supported catalyst particles embedded in olefin polymer particles if desired as well.

The polymer is produced directly in the fluidized bed by polymerization of the monomer or mixture of monomers on the fluidized particles of catalyst composition, supported catalyst composition or prepolymerized catalyst composition within the bed. Start-up of the polymerization reaction is achieved using a bed of preformed polymer particles, which are preferably similar to the desired polymer, and conditioning the bed by drying with inert gas or nitrogen prior to introducing the catalyst composition, the monomers and any other gases that are desired to be included in the recycle gas stream, such as a diluent gas, hydrogen chain transfer agent, or an inert condensable gas when operating in gas phase condensing mode. The produced polymer is discharged continuously or semi-continuously from the fluidized bed as desired.

The gas phase processes most suitable for the practice of this invention are continuous processes which provide for the continuous supply of reactants and the removal of products from the reaction zone of the reactor, thereby providing a steady-state environment on the macro scale. Products are readily recovered by exposure to reduced pressure and optionally elevated temperatures (devolatilization) according to known techniques. Typically, the fluidized bed of the gas phase process is operated at temperatures greater than 50°C, preferably from 60°C to 110°C, more preferably from 70°C to 110°C.

Suitable gas phase processes which are adaptable for use in the process of this invention are disclosed in US-A's: 4,588,790; 4,543,399; 5,352,749; 5,436,304; 5,405,922; 5,462,999; 5,461,123; 5,453,471; 5,032,562; 5,028,670; 5,473,028; 5,106,804; 5,556,238; 5,541,270; 5,608,019; and 5,616,661.

### Examples 1-3

The following Examples are provided as further illustration of the invention. Unless stated to the contrary all parts and percentages are expressed on a weight basis. The term "overnight", if used, refers to a time of approximately 16-18 hours, the term "room temperature", refers to a temperature of 20-25 °C. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

### Surface Modified Silica Preparation

1A. Davison 955™ silica (900 g, available from Grace Davison Company) which has been heated at 600°C for 3 hours under a nitrogen purge is added to toluene (2400 g) containing methylalumoxane (MAO, Akzo Nobel, Inc. 1314 mL of a 13.7 percent toluene solution). The mixture is stirred for 30 minutes, and the temperature of the mixture increased to 70°C and the volatiles removed *in vacuo.* The resulting dry powder is heated an additional 1 hour under vacuum. The resulting alumoxane modified silica, is a free flowing solid having an aluminum content of 4.5 mmol/g. Contacting with hexane at 25 °C results in less than 1 percent weight loss.
1B. Davison 948™ silica (370 g) which has been heated at 500°C for 3 hours under a nitrogen purge is slurried in enough isopentane to obtain an easily stirred mixture. 549 ml of a 12.9 percent (4.14 M Al) toluene solution of a tri(n-octyl)aluminum modified methylalumoxane (MMAO-12, Akzo-Nobel, Inc.) is added at room temperature. The mixture is stirred for 1 hour, the supernatant is removed via cannula, and the treated silica is washed with isopentane (1000 ml) and dried under high vacuum. The resulting free flowing, powder has an aluminum content of 4.5 mmol/g. Contacting with hexane at 25 °C results in less than 1 percent weight loss.
1C. Davison 948™ silica (39.8 g) which has been heated at 200°C in air for 24 hours is slurried in hexane (250 ml) in a glass vial and shaken on an orbital shaker for 5 minutes. Triethylaluminum (16.32 mL, 0.119 moles, 3.0 moles/g silica) is slowly added at room temperature. The mixture is shaken, not stirred, for 2 hours, collected on a filter, and dried under high vacuum.
1D. To 250 ml toluene in a 500 mL sidearm flask equipped with a magnetic stir bar is added 9 g of silane treated fumed silica (Cabosil™ TS-610, available from Cabot Company). Stirring is commenced until all the silica is uniformly dispersed. Next, 60 g of a 10 percent toluene solution of methylalumoxane (MMAO-3A available from Akzo-Noble Corporation) is added and stirring continued for a minimum of 1 hour before use in forming spray dried supported catalyst compositions.
1E. Davison 948™ silica (6.00 g) is heated at 500°C for 3 hours under a nitrogen purge prior to use.

### Supported Catalyst Preparation

Example I To a 50 mL glass flask, 0.105 g (10.2 µmol) of propane-1,3-bis[oxyphenyl-2-((N-2,3,4,5-dibenzopyrole)-5-methyl-2-oxy)phenyl]hafnium dimethyl, prepared according to the teachings of US-A-2004/0005984 with subsequent conversion to the dimethyl complex by reaction with methylmagnesium bromide (for structure see figure 1), 2.01 g of MAO modified silica 1A, and 25 mL of dry degassed toluene are combined. The bottle is capped and shaken on an orbital shaker for 4.5 hours. The solid product is separated by filtration and dried under reduced pressure.

Comparative A The reaction conditions of Example 1 are substantially repeated excepting support 1E which is not surface modified is employed.

Example 2 A solution of propane-1,3-bis[oxyphenyl-2-((N-2,3,4,5-dibenzopyrole)-5-methyl-2-oxy)phenyl]hafnium dimethyl, prepared according to the teachings of US-A-2004/0005984 (for structure see figure 1) in 25 mL toluene is prepared. This solution is combined with the still stirring slurry of surface treated fumed silica 1D and the combined mixture stirred for an additional hour. The mixture is spray dried using a laboratory spray-dryer located in a dry box under anaerobic conditions substantially as disclosed in US-A-5,672,669 and US-A-5,674,795. A total of 11 g of round particles having a D50 particle size of 5-15 µm and average hafnium content of 40 µmol/g is obtained.

Example 3 The reaction conditions of Example 2 are substantially repeated at a larger scale using an 8 ft. (2.4 meter) diameter closed cycle spray drier. The quantities of ingredients used are 17 kg of toluene, 1.6 kg of fumed silica, 11.3 kg of a 10 percent toluene solution of methylalumoxane, and 110 mmol of propane-1,3-bis[oxyphenyl-2-((N-2,3,4,5-dibenzopyrole)-5-methyl-2-oxy)phenyl]hafnium dimethyl in 500 g toluene. The slurry is spray-dried under nitrogen atmosphere using the following conditions. The chamber inlet temperature is 145 °C, the chamber gas flow is 450 lbs (204 kg) per hour, the slurry feed rate is 40 lbs (18 kg) per hour. The particle size of the spray-dried material is controlled via the atomizer wheel speed in a range from 50-90 percent of maximum, giving particle sizes ranging from 10-40 µm. Substantially round particles (span=1-2) are obtained. The total yield is 90 g of dried catalyst per kg of slurry.

### Polymerization

A cleaned, purged and inerted 2 liter jacketed polymerization reactor equipped with a stirrer is charged with 0.5 g of surface modified silica 1C, followed by H₂ (600 standard cm³) and 680 g propylene. The mixture is stirred for 5 minutes and then heated to 70 °C. Catalyst (0.25 g, 1.25 mmol in hexane) is added by nitrogen pressure. After 40 minutes polymerization time, the reactor is vented and cooled and the resulting polymer removed from the reactor. Results are contained in Table 1.

**Table 1**

| run | Catalyst | Support | Efficiency (kg/g Hf) |
|---|---|---|---|
| 1 | Ex. 1 | 1C | 250 |
| 2* | Comp. A | 1E | 0 |

| | | | |
|---|---|---|---|
| * comparative not an example of the invention, support not surface modified | | | |

As may be seen by reference to the results contained in Table 1, the use of silica that has been surface modified, gives an active catalyst composition whereas using an unmodified silica support results in an inactive catalyst composition.

### Examples 4-19

### Component 1) - Modified Support Preparation

Component IF Davison 955™ silica (755 g, available from Grace Davison Company) which has been heated to 200°C under a nitrogen purge for 3 hours is added to toluene (2599 g) containing methalumoxane (MAO, Akzo Nobel, Inc.; 1326 g of a 30 percent toluene solution). The mixture is stirred for several hours and the supernatant decanted. The solids are dried under reduced pressure to a dry white powder and finally heated an addition hour under high vacuum. The resulting alumoxane modified silica is a free flowing solid having an aluminum content of 5.4 mmol Al/g (31 percent MAO by weight).

Component 1G A 30.0 g portion of Component 1A is stirred in 200 mL of toluene at 50°C for 4 hours and the supernatant decanted without cooling. The solids are then collected on a frit and washed with 100 mL of pentane at 25°C before drying under reduced pressure. The white, free flowing powder has an aluminum content of 5.2 mmol/g by mass balance.

Component 1H Davison 948™ silica (949 g, available from Grace Davison Company) which has been heated to 600°C under a nitrogen purge for 3 hours is added to toluene (2400 g) containing MAO (1314 g of a 13.7 percent toluene solution). The mixture is stirred for 30 minutes and then the temperature is increased to 70°C and the volatiles are removed under reduced pressure. The resulting dry powder is then heated an addition hour under high vacuum. The resulting alumoxane modified silica is a free flowing solid having an aluminum content of 4.5 mmol Al/g. Contact with hexane at 25°C results in less than 1 percent weight loss.

Component 1I Ineos 757™ silica (20.0 g, available from Ineos Silicas, Inc.) which has been heated to 600°C under a nitrogen purge for 3 hours is added to toluene (150 mL). Slowly, 4.76 g of triisobutylaluminum is added and the mixture stirred overnight. The supernatant is decanted, the solids are stirred in 150 mL of toluene at 50°C for 2 hours, and the supernatant is decanted without cooling. The solids are then collected on a frit and washed with 50 ml of toluene followed by 150 mL of pentane at 25°C before drying under reduced pressure. The white free flowing powder has an approximate aluminum content of 0.7 mmol/g based on mass balance.

### Component 2) - Metal Complex Preparation

Component 2A (propane-1,3-bis[oxyphenyl-2-((N-2,3,4,5-dibenzopyrole)-5-methyl-2-oxy)phenyl]hafnium dimethyl) - To a flask containing 0.623 g of hafnium tetrachloride in 65 mL of ether at -20°C is added 1.50 g of propane-1,3-bis[oxyphenyl-2-((N-2,3,4,5-dibenzopyrole)-5-methyl-2-hydroxy)phenyl]. After warming to room temperature and stirring overnight, the mixture is contacted with 2.8 mL of a 3.0 M ether solution of methylmagnesium bromide. The mixture is stirred for 5 hours and the volatiles are removed under reduced pressure. The solids are twice washed with 55 mL of pentane and dried under reduced pressure. The product is extracted with 60 mL of toluene and filtered through dry diatomaceous earth. The volatiles are removed under reduced pressure from the filtrate to yield the desired product as a white solid in 75 percent yield.

Component 2B (butane-1,4-bis[oxyphenyl-2-((N-2,3,4,5-dibenzopyrole)-5-methyl-2-oxy)phenyl]hafnium dichloride). Hafnium tetrabenzyl is contacted in equimolar quantity with hafnium tetrachloride in ether for 7 hours at 25°C, followed by removal of the volatiles under reduced pressure to prepare hafnium dibenzyl dichloride mono(diethylether) adduct in 75 percent yield. To a flask containing 0.290 g of this product in 60 mL of toluene are added 0.450 g of butane-1,4-bis[oxyphenyl-2-((N-2,3,4,5-dibenzopyrole)-5-methyl-2-hydroxy)phenyl] (prepared in accordance with the teachings of US-A-2004/0005984). After heating to 75°C for 5 hours, the volatiles are removed under reduced pressure to yield 530 mg of the desired product as a powder (90 percent yield).

### Component 3) - Cocatalyst Preparation

Component 3A (triethylaluminum adduct of methylbis(C₁₈₋₂₂alkyl)ammonium (p-hydroxy-phenyl)tris(pentafluorophenyl)borate [((C₂H₅)₂AlOC₆H₄)B⁻(C₆F₅)₃] [N⁺HMe(C₁₈₋₂₂H₃₇₋₄₅)₂])

In a glass ampoule, 240 mg of a 0.1 M toluene solution of triethylaluminum are combined with 305 mg of a 10.4 weight percent toluene solution of the methylbis(C₁₈₋₂₂alkyl)-ammonium salt of p hydroxyphenyltris(pentafluorophenyl)borate, [(pHOC₆H₄)B⁻(C₆F₅)₃] [N⁺HMe(C₁₈₋₂₂H₃₇₋₄₅)₂], and stirred for 15 minutes. Prior to use, the product is diluted with 505 mg of toluene.

### Component 4) - Surface Modifier

4A is methylalumoxane (MAO, available from Akzo-Nobel, Inc.)
4B is triisobutylaluminum (Al(CH₂CHMe₂)₃) 1.0 M in hexanes.

### Component 5) - Polymerization Modifier Preparation

5A is hydroxy aluminum distearate ((HO)Al(CO₂C₁₇H₃₅)₂); MW = 615.0 g/mol
5B is zinc lactate (Zn(O₂CCH(OH)Me)₂); MW = 243.5 g/mol

### Polymerization Conditions

A 1 liter stirred, jacketed, polymerization reactor is charged with 400 g propylene and heated to 60°C, resulting in an internal pressure of 375 psi (2.8 MPa). A scavenger (silica supported MAO, component 1A, 2.0 mmol for example 4 or triisobutylaluminum, 1.0 mmol, for examples 5-19) in 10 mL of hexane solvent is added to the reactor contents and circulated for 10 minutes to remove impurities. Supported catalysts containing various amounts of surface modified support (1A-1D), catalyst (2A, 2B), cocatalyst (MAO or 3A), and optional polymerization modifier (5A, 5B) are prepared in glass ampoules in toluene or mixed hexanes, and added to the reactor, followed by an additional 10 mL of mixed hexanes to purge transfer lines. In example 13, cocatalyst 3A is added to the reactor due to the absence of methalumoxane in the surface modifed support preparation used in that example. In all other examples, excess surface modifier (MAO) also serves as cocatalyst. The reaction temperature is maintained at 60°C. After 30 minutes polymerization time, the reactor is vented and cooled and the resulting polymer removed.

Additional details of supported catalyst preparations are:
Examples 4-12, 14 In a glass vial the desired amount (0.1-5 µmol) of the catalyst component 2A, as a 0.005 M solution in toluene is combined with the desired amount of support component 1A, 1B, 1C, or 1D (100:1-10,000:1, based on moles Hf) in about 2 mL of toluene to generate a slurry. After a time, typically 10 to 60 minutes, the mixture is injected directly into the polymerization vessel. In Ex. 9, hexanes is substituted for toluene in this preparation.
Example 13 In a glass ampoule, the full amount of activator component 3A is added to 1.0 g of support component 1D. After 15 minutes, 15 mL of pentane is added, and after an additional 15 minutes, 24.5 mg of catalyst component 2A in 3 mL of toluene is added. After contacting overnight, the solids are collected on a filter and dried under reduced pressure. Quantitative yield. Hf loading = 25 µmol/g. Al:Hf molar ratio from component 1D = 30.
Example 15 In a glass ampoule, 5.0 g of support component 1B, 75 mL of toluene, and 50.8 mg of catalyst component 2A are combined. After 2.5 hours, the solids are collected on a filter and washed with 65 mL of toluene before drying under reduced pressure. Yield: 6.60 g. Hf loading = 7.9 µmol/g. Al:Hf molar ratio = 500.
Example 16 In a glass ampoule 3 percent of polymerization modifier component 4A is contacted with the desired amount of product from Example 15 for 4 hours in toluene before use without isolation.
Example 17 In a glass ampoule, 10 percent of polymerization modifier component 4A is contacted with the desired amount of product from Example 15 for 19 hours in toluene before use without isolation.
Example 18 In a glass ampoule 3 weight percent of polymerization modifier component 4B is contacted with the desired amount of product from Example 15 for 4 hours in toluene before use without isolation.
Example 19 In a glass ampoule, 10 weight percent of polymerization modifier component 4B is contacted with the desired amount of product from Example 15 for 23 hours in toluene before use without isolation.

Results are contained in Table 2.

**Table 2**

| **Ex.** | **Support Component** | **Surface Modifier** | **Catalyst Component** | **Activator Component** | **PM Component** | **µmol Hf** | **Al:Hf Ratio (from support)** | **Polymer Yield (g)** | **Efficiency (kg poly/g Hf)** |
|---|---|---|---|---|---|---|---|---|---|
| 4 | 1A | 4A | 2A | MAO* | - | 1.0 | 1,000 | 28.2 | 158 |
| 5 | " | " | " | " | - | " | " | 18.7 | 105 |
| 6 | " | " | " | " | - | " | " | 50.2 | 281 |
| 7 | " | " | " | " | - | 0.2 | 10,000 | 27.7 | 776 |
| 8 | 1B | " | " | " | - | 1.0 | 250 | 10.0 | 56 |
| 9 | " | " | " | " | - | " | 250 | 28.9 | 162 |
| 10 | 1C | " | " | " | - | " | 250 | 10.9 | 61 |
| 11 | " | " | " | " | - | " | 500 | 10.4 | 58 |
| 12 | " | " | " | " | - | " | 1,000 | 5.6 | 31 |
| 13 | 1D | 4B | " | 3A | - | " | 30 | 7.6 | 43 |
| 14 | 1B | 4A | 2B | MAO* | - | " | 1000 | 89.1 | 499 |
| 15 | " | " | 2A | " | - | " | 500 | 27.5 | 154 |
| 16 | " | " | " | " | 5A | " | 64 | 12.9 | 72 |
| 17 | " | " | " | " | " | " | " | 7.0 | 39 |
| 18 | " | " | " | " | 5B | " | " | 12.1 | 68 |
| 19 | " | " | " | " | " | " | " | 6.2 | 35 |

| | | | | | | | | | |
|---|---|---|---|---|---|---|---|---|---|
| * excess surface modifier used to prepare surface modified support | | | | | | | | | |

## Claims

1. A supported, heterogeneous catalyst composition for use in polymerization of addition polymerizable monomers to form high molecular weight polymers, comprising:
1) a substrate comprising a solid, particulated, high surface area, silica surface modified by treatment with an organoaluminum compound,
2) a Group 4 metal bis(hydroxyarylaryloxy) complex of Formula I: 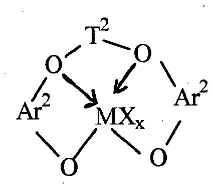 wherein:
T² is a divalent bridging group of from 2 to 20 atoms not counting hydrogen; and
Ar² independently each occurrence is an arylene or an alkyl- or aryl-substituted arylene group of from 6 to 20 atoms not counting hydrogen;
M is a Group 4 metal;
X independently each occurrence is an anionic, neutral or dianionic ligand group;
x is a number from 1 to 5 indicating the number of such X groups; and
bonds and electron donative interactions are represented by lines and arrows respectively; and optionally,
3) an activating cocatalyst for the metal complex.

2. The composition according to claim 1 wherein the metal complex is selected from the group consisting of compounds of the formula: 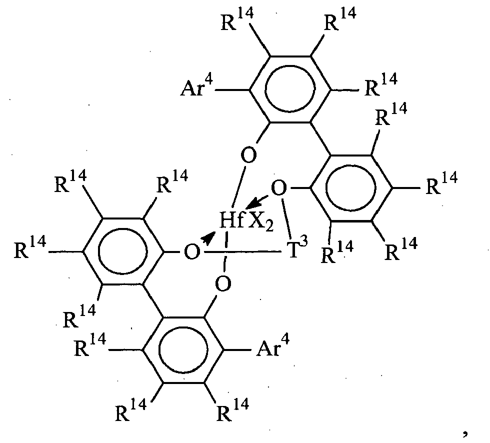
where Ar⁴ is C₆₋₂₀ aryl or inertly substituted derivatives thereof, and
T³ independently each occurrence is C₃₋₆ alkylene or an inertly substituted derivative thereof;
R¹⁴ independently each occurrence is hydrogen, halo, hydrocarbyl, trihydrocarbylsilyl, or trihydrocarbylsilylhydrocarbyl of up to 50 atoms not counting hydrogen; and
X, independently each occurrence is halo or a hydrocarbyl or trihydrocarbylsilyl group of up to 20 atoms not counting hydrogen, or 2 X groups together are a divalent derivative of the foregoing hydrocarbyl or trihydrocarbylsilyl groups.

3. The composition according to claim 2 wherein the metal complex is selected from compounds corresponding to the formula: 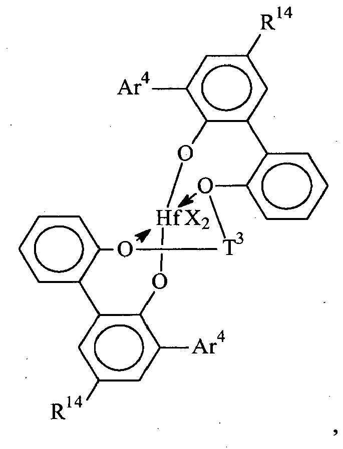
wherein Ar⁴ is 3,5-di(isopropyl)phenyl, 3,5-di(isobutyl)phenyl, dibenzo-1H-pyrrole-1-yl, or anthracen-5-yl,
R¹⁴ is hydrogen, halo, or C₁₋₄ alkyl,
T³ is propan-1,3-diyl or butan-1,4-diyl, and
X is chloro, methyl or benzyl.

4. The composition according to claim 3 wherein the metal complex is propane-1,3-bis[oxyphenyl-2-((N-2,3,4,5-dibenzopyrole)-5-methyl-2-oxy)phenyl]hafnium dimethyl.

5. A composition according to claim 1 additionally comprising a polymerization modifier.

6. A composition according to claim 5 wherein the polymerization modifier is hydroxyaluminum di(stearate), zinc di(2-propionate), zinc di(salicylate), zinc bis-3,5-di(i-propyl)salicylate, or zinc bis-3,5-di(t-butyl)salicylate.

7. A composition according to claim 1 prepared by spray drying a solution or slurry of the components.

8. A process for preparing a prepolymerized catalyst or a high molecular weight polymer comprising contacting one or more addition polymerizable monomers under addition polymerization conditions with a catalyst composition according to any one of claims 1-7.

9. A process according to claim 8 wherein a mixture comprising ethylene and one or more C₃₋₈ α-olefins is polymerized.

10. A process according to claim 9 wherein a mixture comprising ethylene and propylene is polymerized to form a polymer comprising at least 90 weight percent polymerized propylene.

11. A process according to claim 8 wherein propylene is homopolymerized.

## Patentansprüche

1. Eine Zusammensetzung eines heterogenen Trägerkatalysators zur Verwendung bei der Polymerisation von additionspolymerisierbaren Monomeren, um hochmolekulargewichtige Polymere zu bilden, beinhaltend:
1) ein Substrat, beinhaltend eine feste, partikelförmige Siliciumdioxidoberfläche mit großer Oberfläche und modifiziert durch Behandlung mit einer Organoaluminiumverbindung,
2) einen Gruppe-4-Metall-bis(Hydroxyarylaryloxy)komplex der Formel I: 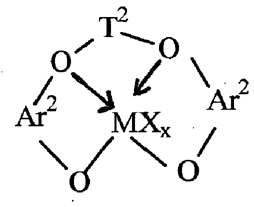 wobei:
T² eine zweiwertige Brückengruppe mit 2 bis 20 Atomen, Wasserstoff nicht mitgezählt, ist; und
Ar² unabhängig bei jedem Auftreten ein Arylen oder eine Alkyl- oder Aryl-substituierte Arylengruppe mit 6 bis 20 Atomen, Wasserstoff nicht mitgezählt, ist;
M ein Gruppe-4-Metall ist;
X unabhängig bei jedem Auftreten eine anionische, neutrale oder dianionische Ligandengruppe ist;
x eine Zahl von 1 bis 5, die die Anzahl solcher X-Gruppen angibt, ist; und
Bindungen und elektronenabgebende Wechselwirkungen durch Linien bzw. Pfeile dargestellt sind;
und optional
3) einen aktivierenden Cokatalysator für den Metallkomplex.

2. Zusammensetzung gemäß Anspruch 1, wobei der Metallkomplex ausgewählt ist aus der Gruppe, bestehend aus Verbindungen der Formel: 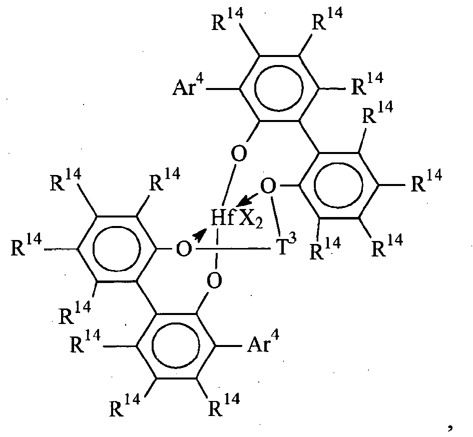
wobei Ar⁴ C₆₋₂₀-Aryl oder inert substituierte Derivate davon ist und
T³ unabhängig bei jedem Auftreten C₃₋₆-Alkylen oder ein inert substituiertes Derivat davon ist;
R¹⁴ unabhängig bei jedem Auftreten Wasserstoff, Halogen, Hydrocarbyl, Trihydrocarbylsilyl oder Trihydrocarbylsilylhydrocarbyl mit bis zu 50 Atomen, Wasserstoff nicht mitgezählt, ist; und
X unabhängig bei jedem Auftreten Halogen oder eine Hydrocarbyl- oder Trihydrocarbylsilylgruppe mit bis zu 20 Atomen, Wasserstoff nicht mitgezählt, ist, oder 2 X-Gruppen zusammen ein zweiwertiges Derivat der vorstehenden Hydrocarbyl- oder Trihydrocarbylsilylgruppen sind.

3. Zusammensetzung gemäß Anspruch 2, wobei der Metallkomplex ausgewählt ist aus Verbindungen, entsprechend der Formel: 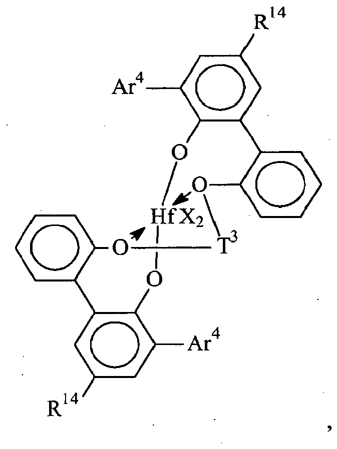
wobei Ar⁴ 3,5-Di(isopropyl)phenyl, 3,5-Di(isobutyl)phenyl, Dibenzo-1H-pyrrol-1-yl oder Anthracen-5-yl ist,
R¹⁴ Wasserstoff, Halogen oder C₁₋₄-Alkyl ist,
T³ Propan-1,3-diyl oder Butan-1,4-diyl ist und
X Chlor, Methyl oder Benzyl ist.

4. Zusammensetzung gemäß Anspruch 3, wobei der Metallkomplex Propan-1,3-bis[oxyphenyl-2-((N-2,3,4,5-dibenzopyrol)-5-methyl-2-oxy)-phenyl]hafniumdimethyl ist.

5. Zusammensetzung gemäß Anspruch 1, zusätzlich beinhaltend ein Polymerisations-Modifiziermittel.

6. Zusammensetzung gemäß Anspruch 5, wobei das Polymerisations-Modifiziermittel Hydroxyaluminium-di(stearat), Zink-di(2-propionat), Zink-di(salicylat), Zink-bis-3,5-di(i-propyl)salicylat oder Zink-bis-3,5-di(t-butyl)salicylat ist.

7. Zusammensetzung gemäß Anspruch 1, die durch Sprühtrocknen einer Lösung oder Aufschlämmung der Komponenten hergestellt wird.

8. Ein Verfahren zur Herstellung eines präpolymerisierten Katalysators oder eines hochmolekulargewichtigen Polymers, beinhaltend das In-Kontakt-Bringen eines oder mehrerer additionspolymerisierbarer Monomere unter Additionspolymerisationsbedingungen mit einer Katalysatorzusammensetzung gemäß einem der Ansprüche 1-7.

9. Verfahren gemäß Anspruch 8, wobei eine Mischung, beinhaltend Ethylen und ein oder mehrere C₃₋₈-α-Olefine, polymerisiert wird.

10. Verfahren gemäß Anspruch 9, wobei eine Mischung, beinhaltend Ethylen und Propylen, polymerisiert wird, um ein Polymer, das zu mindestens 90 Gewichtsprozent ein polymerisiertes Propylen beinhaltet, zu bilden.

11. Verfahren gemäß Anspruch 8, wobei das Propylen homopolymerisiert wird.

## Revendications

1. Une composition de catalyseur hétérogène supporté destinée à être utilisée dans la polymérisation de monomères polymérisables par addition pour former des polymères de haut poids moléculaire, comprenant :
1) un substrat comprenant une surface de silice d'aire spécifique élevée particulaire solide modifiée par traitement avec un composé d'organoaluminium,
2) un complexe de bis(hydroxyarylaryloxy) de métal du Groupe 4 de la Formule I : 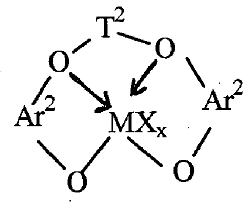 dans laquelle :
T² est un groupe pontant divalent ayant de 2 à 20 atomes sans compter l'hydrogène ; et
Ar² est indépendamment à chaque occurrence un arylène ou un groupe arylène substitué par un alkyle ou un aryle ayant de 6 à 20 atomes sans compter l'hydrogène ;
M est un métal du Groupe 4 ;
X est indépendamment à chaque occurrence un groupe ligand anionique, neutre ou dianionique ;
x est un nombre allant de 1 à 5 indiquant le nombre de ces groupes X ; et
les liaisons et les interactions donneuses d'électrons sont représentées par des lignes et des flèches respectivement ;
et de manière facultative,
3) un cocatalyseur activateur pour le complexe métallique.

2. La composition selon la revendication 1 dans laquelle le complexe métallique est sélectionné dans le groupe constitué de composés de la formule : 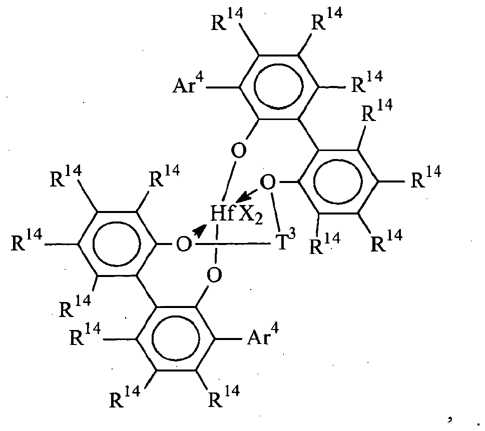
où Ar⁴ est un aryle en C₆ à C₂₀ ou des dérivés substitués de façon inerte de celui-ci, et T³ est indépendamment à chaque occurrence un alkylène en C₃ à C₆ ou un dérivé substitué de façon inerte de celui-ci ;
R¹⁴ est indépendamment à chaque occurrence l'hydrogène, un halo, un hydrocarbyle, un trihydrocarbylsilyle, ou un trihydrocarbylsilylhydrocarbyle ayant jusqu'à 50 atomes sans compter l'hydrogène ; et
X est, indépendamment à chaque occurrence, un halo ou un groupe hydrocarbyle ou trihydrocarbylsilyle ayant jusqu'à 20 atomes sans compter l'hydrogène, ou 2 groupes X ensemble sont un dérivé divalent des groupes hydrocarbyle ou trihydrocarbylsilyle susmentionnés.

3. La composition selon la revendication 2 dans laquelle le complexe métallique est sélectionné parmi des composés correspondant à la formule : 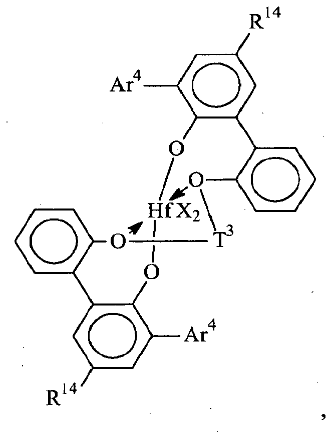
dans laquelle Ar⁴ est le 3,5-di(isopropyl)phényle, le 3,5-di(isobutyl)phényle, le dibenzo-1 H-pyrrole-1-yle, ou l'anthracén-5-yle,
R¹⁴ est l'hydrogène, un halo, ou un alkyle en C₁ à C₄,
T³ est le propan-1,3-diyle ou le butan-1,4-diyle, et
X est un chloro, un méthyle ou un benzyle.

4. La composition selon la revendication 3 dans laquelle le complexe métallique est le diméthyle de propane-1,3-bis[oxyphényl-2-((N-2,3,4,5-dibenzopyrole)-5-méthyl-2-oxy)phényl]hafnium.

5. Une composition selon la revendication 1 comprenant de plus un modificateur de polymérisation.

6. Une composition selon la revendication 5 dans laquelle le modificateur de polymérisation est le di(stéarate) d'hydroxyaluminium, le di(2-propionate) de zinc, le di(salicylate) de zinc, le bis-3,5-di(i-propyl)salicylate de zinc, ou le bis-3,5-di(t-butyl)salicylate de zinc.

7. Une composition selon la revendication 1 préparée en séchant par atomisation une solution ou une suspension épaisse des composants.

8. Un procédé pour préparer un catalyseur prépolymérisé ou un polymère de haut poids moléculaire comprenant le fait de mettre en contact un ou plusieurs monomères polymérisables par addition dans des conditions de polymérisation par addition avec une composition de catalyseur selon l'une quelconque des revendications 1 à 7.

9. Un procédé selon la revendication 8 dans lequel un mélange comprenant de l'éthylène et une ou plusieurs α-oléfines en C₃ à C₈ est polymérisé.

10. Un procédé selon la revendication 9 dans lequel un mélange comprenant de l'éthylène et du propylène est polymérisé pour former un polymère comprenant au moins 90 pour cent en poids de propylène polymérisé.

11. Un procédé selon la revendication 8 dans lequel le propylène est homopolymérisé.
